# EUROPÄISCHE PATENTSCHRIFT

(11) **EP 2 205 474 B1**
(45) Veröffentlichungstag und Bekanntmachung des Hinweises auf die Patenterteilung: **29.03.2017**
(21) Anmeldenummer: 08831537.9
(22) Anmeldetag: 21.09.2008
(51) Int. Cl.: B62B 3/04

(54) **TRANSPORTSYSTEM, INSBESONDERE MIT BEWEGLICHEN PALETTEN**
TRANSPORT SYSTEM, IN PARTICULAR HAVING MOVABLE PALLETS
SYSTÈME DE TRANSPORT COMPORTANT NOTAMMENT DES PALETTES MOBILES

(30) Priorität: 21.09.2007 DE 102007045404; 31.07.2008 DE 102008035914
(43) Veröffentlichungstag der Anmeldung: 14.07.2010
(73) Patentinhaber: Hergeth, Willibald, 92334 Berching (DE)
(72) Erfinder: Hergeth, Willibald, 92334 Berching (DE)
(74) Vertreter: Sawodny, Michael-Wolfgang
(86) Internationale Anmeldenummer: PCT/DE2008/001560
(87) Internationale Veröffentlichungsnummer: WO 2009/036750

(56) Entgegenhaltungen:
- EP-A- 1 352 815
- EP-A- 1 743 828
- WO-A-2006/061150
- DE-U1- 20 309 653
- DE-U1-202004 001 688
- DE-U1-202006 005 137
- FR-A- 2 631 948
- FR-A- 2 879 951

## Beschreibung

Die Erfindung betrifft ein Transportsystem mit einem Trolley und einem Güterträger, die über eine Kupplung miteinander lösbar zu verbinden sind. Hierbei wird unter Trolley ein mit Rollen versehenes Transporthilfsmittel verstanden.

Paletten haben eine große Bedeutung in der Transportlogistik, um den Umschlag von Gütern möglichst schnell und effizient durchführen zu können. Um diesen Prozess zu beschleunigen, ist es aus der WO 98/58849 und auch aus der GB 960 768 bekannt, die Palette an ihrer Unterseite mit Rädern zu versehen, auf welchen die Palette mit oder ohne Ladegut bewegt werden kann. Um die automatisierte Beförderung der Palette zu ermöglichen, können die Räder bei einer Palette nach WO 98/58849 eingefahren werden. Zur Fixierung der Räder in einer Position ist eine Verriegelung vorgesehen, die entfernt werden muss, um die Räder dann separat ein- oder ausfahren zu können. Soll die Palette vor einer unbeabsichtigten Bewegung gesichert werden, so sind in aufwändiger Weise zunächst die Räder zu entriegeln, dann einzufahren und schließlich die Räder erneut zu verriegeln. Die einzelnen Paletten können über Kupplungen miteinander zu einem Palettenzug verbunden werden und wenn die Räder freigegeben sind, gleichzeitig hintereinander in einer Reihe wegtransportiert werden.

In der DE 1 943 854 A ist ein ähnliches zugartiges Transportgestell zum Tragen von Paletten bekannt, die möglichst hoch abgehoben vom Boden auf in Ecken des Transportgestells angeordneten Stützen eines einzelnen Transportwagens über diesen überstehend automatisiert abgenommen werden können.

Die EP 1 743 828 A1 als nächstliegender Stand der Technik zeigt ein Transportsystem mit einem Zugfahrzeug und einer Reihe von Anhängern, die miteinander gekuppelt sind, wobei die Anhänger einen Rollrahmen umfassen, der mit mindestens einer Tragkonstruktion verbunden ist, die zum Transportieren einer Last bestimmt ist, wobei der Rollrahmen Rolleinrichtungen und Kupplungseinrichtungen, die zum Kuppeln des Anhängers an mindestens einen anderen Anhänger oder an ein Zugfahrzeug des Transportzuges vorgesehen ist sowie Kupplungseinrichtungen umfasst, die zum lösbaren Kuppeln der Tragkonstruktion mit dem Rollrahmen angeordnet sind, wobei die Tragkonstruktion außerdem eigene Rolleinrichtungen umfasst, damit sie im Verhältnis zu dem Rollrahmen verlagerbar ist. Die Rolleinrichtungen des Rollrahmens zeichnet sich dadurch aus, dass sie mindestens drei Räder aufweist, die auf zwei Achsen verteilt sind, die untereinander mittels einen Längsträgers verbunden sind, wobei die Kupplungseinrichtungen mit den Achsen verbunden sind, wobei der Längsträger die Kupplungseinrichtungen umfasst, und wobei die zwei Achsen im Verhältnis zu dem Längsträger um ihre Mittelachse mittels einer mechanischen Übertragung drehbeweglich sind, die angeordnet ist, um sie in der umgekehrten Richtung beweglich zu gestalten.

Aus der FR 2879951 A ist ein Anhänger für ein Transportsystem gekannt geworden, bei dem zwischen zwei Teilen eines Rollrahmens ein Güterträger eingebracht werden kann.

Nachteilig bei den aus dem Stand der Technik bekannten Lösungen ist, dass viele Gestaltungen von Transportvorrichtungen für die Paletten unfall- und fehleranfällig sind, oder dass der Ablauf und die Handhabbarkeit umständlich sind. Beide Situationen verlangsamen den zügigen Umschlag von auf Paletten angeordneten Waren und Gütern.

Hiervon ausgehend ist es Aufgabe der Erfindung, ein gattungsgemäßes umschlagfähiges Transportsystem zu entwickeln, dass eine hohe Akzeptanz bei den Nutzern findet. Die Akzeptanz soll auf die sichere und leichte Handhabbarkeit der Paletten und des Transportsystems zurückzuführen sein. Das Unfallrisiko von Lagerbeschäftigten bei der Verladung und bei dem Umschlag der zu transportierenden Güter soll möglichst gering sein.

Erfindungsgemäß wird die gestellte Aufgabe durch die im Patentanspruch 1 genannten Merkmale gelöst.

Vorteilhafte Ausführungsformen der Erfindung ergeben sich aus den Unteransprüchen.

Bei dem erfindungsgemäßen Transportsystem ist ein Trolley vorgesehen, der zumindest mit einem Güterträger bestückbar ist. Trolley und Güterträger sind jeweils mit Rädern versehen, sodass diese unabhängig voneinander bewegbar sind, jedoch aber auch gemeinsam, im gekoppelten Zustand als Transportsystem bewegbar sind. Die Räder von Trolley und Güterträger sind jeweils in einem separaten Chassis angeordnet. Das Chassis leitet die Lasten des Transportsystems und gegebenenfalls der geladenen Güter in die Räder ein. Ein vorderes und hinteres Chassisteil sind über einen Trolleybügel verbunden, sodass der Güterträger zwischen vorderen und hinterem Chassisteil zu beiden Seiten einführbar ist. Dabei schafft der Trolleybügel den Freiraum zwischen dem vorderen und hinteren Chassisteil zur Aufnahme mehrerer Güterträger oder eines Güterträgers.

In dem Transportsystem lässt sich eine sich über alle Teile des Transportsystems erstreckende Plattform wiederfinden, die mit einer Plattform des Trolleys zusammenfällt. Die Plattform hat eine stabilisierende Wirkung auf den Schwerpunkt des Gütertransportsystems. Auf der Plattform aufbauend gibt es sowohl ein begrenzendes Verbindungsglied zwischen einzelnen Teilen des Trolleys. Auch ist die Plattform dazu bestimmt, ein einzelnes Gut oder mehrere Güter, die auf dem Güterträger vorhanden sind, anordnend aufzunehmen. Mit dem Begriff Plattform ist eine allgemeine Ebene benannt, die aber zwischen den einzelnen Teilen einen gewissen Versatz aufweisen kann.

Der Trolley ruft in seiner Form und Struktur entfernt Erinnerung an eine Form eines Gepäckwagens, der durch einen Hotelbellboy für den Kofferzimmerservice benutzt wird, hervor und kann in seiner Silhouette mit einem auch als Hotel-Cart bezeichneten Wagen verglichen werden. Andere geläufige Begriffe für das eingedeutschte Wort sind auch Außenwagen, Transportwagen, Rahmenwagen, Chassis, Zugwagen, Einspannwagen, wobei manche der Begriffe stärker einen einzelnen funktionellen Aspekt des Trolleys hervorheben.

Der besondere Vorteil dieser Erfindung liegt darin, dass der Güterträger, der zum Beispiel als Palette mit Rädern gestaltet sein kann, ohne umgebendes Chassis beladbar ist. Sobald die Ladung wie Waren oder sonstige Güter auf dem Güterträger verstaut sind, kann der Güterträger an einem beliebigen freien Platz des vorbeikommenden Zugs, der aus mehreren Zugwagen bestehen kann, seitlich innerhalb kürzester Zeit eingeschoben, verriegelt und damit sicher befestigt werden.

Von weiterem Vorteil ist auch die Universalität des Güterträgers. Der Güterträger stellt eine Plattform für auf ihn aufzubringende Transportbehältnisse und Transportgegenstände dar, wie zum Beispiel, aufzustehende Gitterboxen, anzuschraubende Container oder auch Standardpaletten. Solche Standardpaletten sind zum Beispiel auch DB-Europaletten.

Vorzugsweise ist der Güterträger mit einer Zugstange ausgestattet mit welcher der Güterträger bequem von Hand bewegt werden kann. Diese ist zwischen einer Ruhe- und Arbeitsposition verschwenkbar ausgeführt und kann somit in Ruheposition verstaut werden. Vorzugsweise lässt sich die Zugstange innerhalb des Grundrisses des Güterträgers verstauen, sodass er kein Hindernis darstellt.

Nach einem Aspekt kann die Erfindung auch durch den Begriff "Wagen im Wagen" sehr punktiert zusammengefasst werden. Der Trolley, das äußere Chassis, stellt den äußeren Wagen dar und der Güterträger stellt de zweiten, inneren, vom äußeren Wagen eingefassten Wagen dar.

Das Einriegeln erfolgt bei Einnahme der Ankuppelposition selbsttätig. Das sichere Ankuppeln kann so nicht mehr durch einen nachlässigen Lagerarbeiter vergessen werden.

Weitere Vorteile lassen sich aus den Zeichnungen und den Ansprüchen ableiten.

Die Erfindung kann noch leichter verstanden werden, wenn Bezug auf die beiliegenden Zeichnungen genommen wird.
- Figur 1: zeigt eine seitliche Ansicht eines Trolleys
- Figur 2: zeigt eine perspektivische Ansicht eine Trolleys
- Figur 3: zeigt eine Draufsicht eines Trolleys
- Figur 4: zeigt die Vorderansicht eines Trolleys
- Figuren 5-8: zeigen einen Güterträger aus verschiedenen Ansichten, wie Draufsicht, perspektivische Ansicht oder Vorderansicht
- Figur 9: zeigt ein erfindungsgemäßes Transportsystem in der Seitenansicht
- Figur 9a und 9b: zeigen eine Seitenansicht des Transportsystems und den Trolleybügel im Längsschnitt zur Sichtbarmachung des Lenkgetriebes
- Figur 10, 12, 13: zeigen ein erfindungsgemäßes Transportsystem aus verschiedenen Ansichten, die ähnlich den zuvor aufgeführten Ansichten sind
- Figur 11: zeigt eine Ansicht auf ein rechtes Radpaar eines erfindungsgemäßen Transportsystems
- Figuren 14-17: zeigen einzelne Aspekte eines Teils des Verriegelungsmechanismus
- Figur 18: zeigt in einer Perspektive einen Zug mit vier Wagen
- Figur 19: zeigt eine perspektivische Darstellung eines Wagens mit Güterträger beim Einfädeln
- Figuren 20-22: zeigen jeweils in einem Seitenanschnitt den Verriegelungsmechanismus in dreierlei Positionen
- Figren 23-25: zeigen jeweils in perspektivischer Ansicht den Verriegelungsmechanismus in dreierlei Positionen
- Figuren 26: zeigen eine perspektivische Ansicht des Transportsystems, welches mit zwei Güterträgern bestückt ist

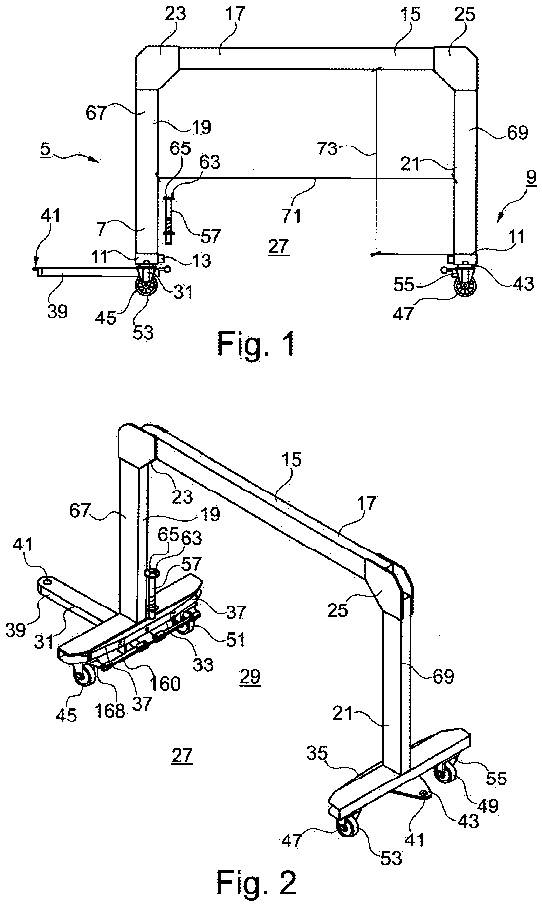

In den Figuren 1 bis 17 ist ein Ausführungsbeispiel eines erfindungsgemäßen Transportsystems aus verschiedenen Ansichten und Perspektiven in Gesamtschau und durch Herauszeichnen besonderer Einzelteile dargestellt. Für die Begrifflichkeiten wird auf beigeschlossene Bezugszeichenliste verwiesen.

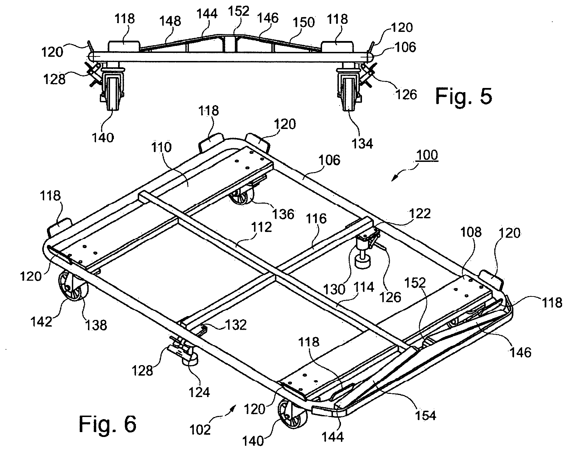

Die Figuren 1 bis 4 zeigen den Trolley 5, der den äußeren Wagen 9 darstellt, ohne den inneren, einzuschiebenden Wagen 104, der den Güterträger 100 darstellt. Der Güterträger 100 ist in seiner basisschaffenden Form in den Figuren 5 bis 8 dargestellt, auf dem, insbesondere über die Aufsetzbretter 108, 110 Standardtransportgefäße aufgeschraubt werden können. Hierzu sind

Teil 65 des Verriegelungsmechanismus dient und über einen Hebestift 63 manuell bedienbar ist.

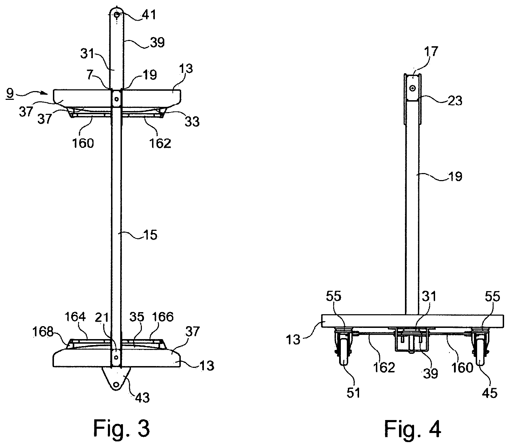

In Figur 2 wird der Trolley 5 der Figur 1 in perspektivischer Ansicht in einer ausgekuppelten Position II so dargestellt, dass sowohl die erste seitliche Einführöffnung 27 als auch die zweite seitliche Einführöffnung 29 zu sehen sind. In der perspektivischen Darstellung der Figur 2 ist deutlicher zu sehen, dass der Trolleybügel 15 mit seinen beiden Längsverstrebungsführungen 23, 25 im Wesentlichen aus drei Teilen, nämlich einer Trolleylängsverstrebung 17 und einem ersten Ständer 19 und einem zweiten Ständer 21 gebildet werden. Der erste Ständer 19 bildet mit weiteren Teilen den vorderen Teil 67, während der zweite Ständer 21 mit weiteren Teilen den hinteren Teil 69 des Trolleys 5 bildet. Unterhalb der Ständer 19, 21 sind querverlaufende Streben angeordnet, die weitere Anbauteile aufweisen und die generelle Plattform 13 des Trolleys 5 (wie in den Figuren 1 und 4 zu sehen) darstellen. An den Ecken der Querverstrebungen sind die Trolleyräder 45, 47, 49, 51 angebracht. Zur Halterung der Trolleyräder 45, 47, 49, 51 werden Doppelplattenrollenhalterungen 55 verwendet. Die vordere Trolleydeichsel 31 umfasst eine Trolleykupplungsstange 39 mit einem Kupplungsstangenauge 41, das in seinen Abmessungen auf ein zweites Kupplungsstangenauge 41 in einem Anhängerkupplungstrapezblech 43 angepasst ist. Ein Verriegelungsbolzen 57 ist auf der Innenseite des Trolleybügels 15, am unteren Ende des Trolleybügels 15, angeordnet. Der Verriegelungsbolzen 57 bildet einen Teil des Verriegelungsmechanismus 65 und weist an seinem oberen Ende einen Hebestift 63 auf. Auf der gleichen Seite, nämlich der Innenseite, sind Untergreiffedern 160, die über Federhaltebügel 168 an den querverlaufenden, plattformbildenden Trolleyteilen befestigt sind, angeordnet. Oberhalb liegen Güterträgerführungen 33, die über Güterträgerführungseinphasenwinkel 37 das seitliche Einführen über Einführöffnungen 27, 29 ermöglichen. Auf jeder Innenseite des unteren Endes des Trolleybügels 15 schließen sich Güterträgerführungen 33, 35 zur Führung des (in der Figur 2 nicht dargestellten) Güterträgers 100 an. Die Trolleyräder 45, 47, 49, 51 können mit Vollgummirollen 53 realisiert sein.

Wie weiter in Figur 1 und 2 ersichtlich ist, bilden jeweils ein vorderes und ein nachlaufendes hinteres Radpaar mit den Trolleyrädern 45, 47, 49, 51 ein

Trolleyfahrwerk. Die Trolleyräder 45 und 47 sind jeweils über eine Spurstange 160 und 162 mit der Deichsel 31 derart gekoppelt, dass beim Schwenken der Deichsel 31, beispielsweise zur Kurvenfahrt, sich ein entsprechender Lenkwinkel der Trolleyräder 45 und 47 einstellt. Je nach Ausführungsform des Trolleyfahrwerks können die Trolleyräder 49 und 51 des nachlaufenden hinteren Radpaares im Lenkwinkel freidrehend, starr oder über Spurstangen 164 und 166 miteinander gekoppelt sein. In Figur 3 ist eine Ausführung gezeigt, bei der das Trolleyfahrwerk Radpaare aufweist, die jeweils über Spurstangen 160, 162, 164 und 168 miteinander gekoppelt sind.

In Figur 3 ist der Trolley 5 der Figur 1 von oben dargestellt, so dass der als äußerer Wagen 9 funktionierende Trolley vor allem durch sein Chassis 7, seine Trolleydeichsel 31 und sein Anhängerkupplungstrapezblech 43 die Silhouette des äußeren Wagens 9 bilden. Von oben ist vom Trolleybügel 15 vor allem der erste Ständer 19 und der zweite Ständer 21, verbunden über die Längsverstrebung, zu sehen. Während die äußeren Seiten der Trolleyplattform bildenden Teile 13 nahezu rechtwinklig sind, sind die Innenseiten über Güterträgerführungseinphasenwinkel 37 der Güterträgerführungen 33, 35 zur leichteren und zuverlässigeren Einphasung des (nicht dargestellten) Güterträgers 100 gestaltet.

Die Trolleydeichsel 31 mündet in die Trolleykupplungsstange 39, an deren Ende ein Kupplungsstangenauge 41, geeignet für das Ankuppeln mehrerer äußerer Wagen 9 zu einem Zug, angeordnet ist.

In der in Figur 4 dargestellten Vorderansicht des Trolleys sind die beiden Trolleyräder 45, 51 zu sehen, die die Trolleydeichsel 31 mit der Trolleykupplungsstange 39 begrenzen. Die Räder 45, 51 setzen sich aus den Doppelplattenrollenhalterungen 55 mit den eingefassten Rollen zusammen. Die querverlaufenden Träger bilden die Trolleyplattform 13, die unterhalb des Ständers 19 aufgespannt ist. Der Ständer 19 mündet über die Längstverstrebungsführung 23 in die Trolleylängsverstrebung 17.

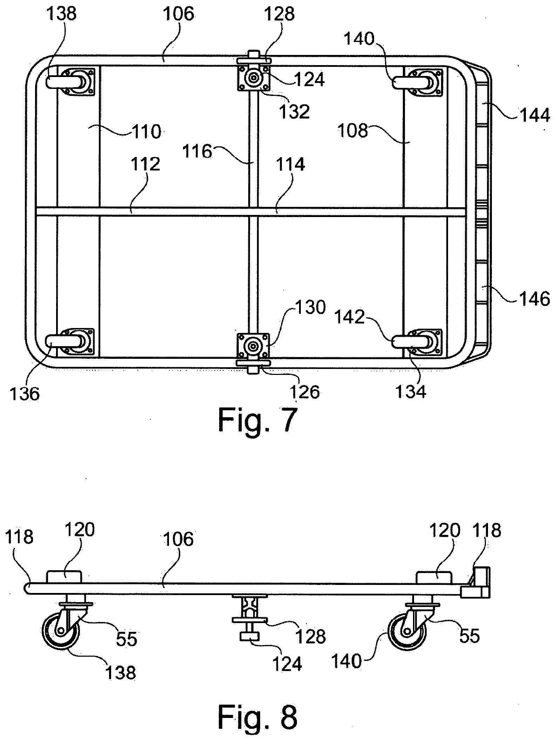

In den Figuren 5 bis 8 wird der Güterträger 100, der als fahrbare Palette 102 gestaltet ist, in verschiedenen Perspektiven dargestellt, nämlich in einer Seitenansicht (Figur 5), in einer perspektivischen Ansicht von oben (Figur 6), in einer Unteransicht (Figur 7) und in einer weiteren Seitenansicht (Figur 8). Die Figuren werden gleichzeitig beschrieben, der Betrachter möge die für den jeweiligen Aspekt beste Darstellung wählen.

Der Güteträger 100 weist als zentrales Bauteil einen Palettenrahmen 106 auf, an dessen Unterseite die Palettenräder 134, 136, 138, 140 abstehen, wobei diese Rollen 142 umfassen können. In der von den Rollen 134, 136, 138, 140 abgewandten Richtung stehen Längsanschlagsnasen 118 und Queranschlagsnasen 120 aus der zentralen Ebene des Palettenrahmens 106 hervor. Der Palettenrahmen 106 bildet die Ebene, die mit der Plattform des Transportsystems gleichgesetzt werden kann. Das güterträgerseitige Teil 154 des Verriegelungsmechanismus umfasst eine erste Verriegelungsfeder 144, eine zweite Verriegelungsfeder 146 sowie einen Federhalter 152, der die beiden Verriegelungsfedern 144, 146 voneinander beabstandet trennt. Die beiden Verriegelungsfedern 144, 146 können mit einer ersten Rampe 148 und einer zweiten Rampe 150 aufgebaut sein, die eine solche Neigung aufweist, dass der in der Figur 1 dargestellte Verriegelungsbolzen 57 ohne erhöhten Kraftaufwand angehoben werden kann, während der Güteträger 100 seitlich einfahrbar ist. Für die Verstärkung des Palettenrahmens 106 gibt es einen Verstärkungsstreben 112, der sowohl als Längsstreben 114 als auch als Querstreben 116 im Innenbereich des Palettenrahmens 106 von einer Seite zur nächsten Seite des Palettenrahmens 106 reichen kann. An den Rändern des Palettenrahmens 106 auf der Innenseite sind Aufsatzbretter 108, 110 angeordnet, die auf der einen Seite Doppelplattenrollenhalterungen 55 für die Palettenräder 134, 136, 138, 140 halten, und auf der gegenüberliegenden Seite als Auflagefläche für Transportbehältnisse und Transportverpackungen dienen können. Auf ungefähr halber Strecke zwischen den vorderen Palettenrädern 140, 134 und den hinteren Palettenrädern 136, 138 sind Stempelbremsen 126, 128 an den Verstärkungsstreben 112, insbesondere an den Querstreben 116, auf der Innenseite des Palettenrahmens 106 angeordnet. Die Stempelbremsen 126, 128 haben jeweils einen Arretierungsstempel 122, 124, wobei die Arretierungsstempel aus einem Stempelträger 130, 132 auf den Boden hin herausstehen. Durch ein Bewegungsgestänge können die Stempelbremsen 126, 128 in die Arretierungsposition hinein- und aus der Arretierungsposition herausgebracht werden. Die Stempelträger 130, 132 sind wie viereckige Platten gestaltet, in deren Mitte jeweils die Arretierungsstempel 122, 124 sitzen.

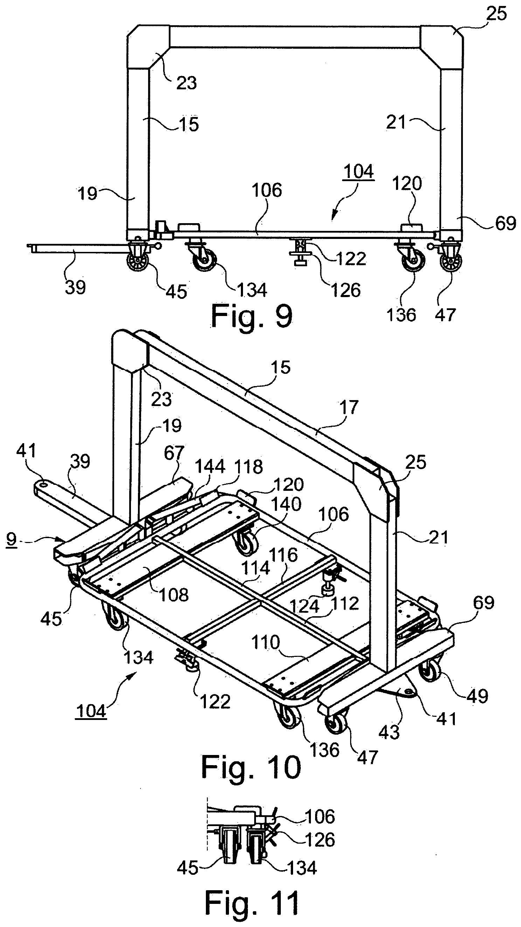

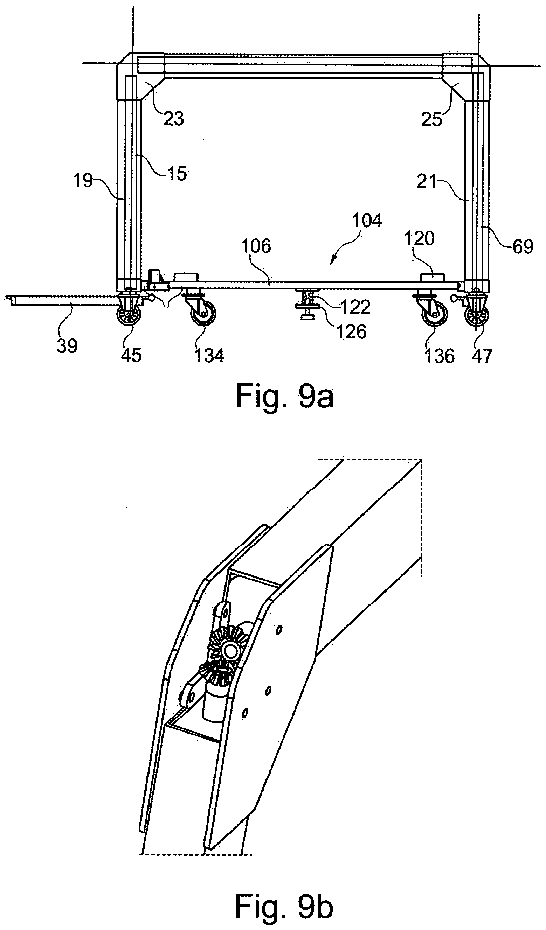

In den Figuren 9 bis 13 werden der Güterträger als innerer Wagen 104 zusammen mit dem äußeren Wagen 9 im Eingriff, das heißt in der Ankuppelposition I gezeigt. Aufgrund der gleichen Höhe der Räder 45, 134, 47, 136 ist - für einen Fachmann erkenntlich - die rollbare Bewegungsposition auf dem Boden III dargestellt.

Wie in Figur 11 besonders gut zu sehen ist, stehen die Palettenräder 134 ff. des inneren Wagens 104 seitlich über die sich aus den Rädern 45, 47, 49, 51 bildenden Breite des Trolleys hinaus. Die größere Breite der Räder 134, 136, 138, 140 im Vergleich zu den Rädern 45, 47, 49, 51 sorgt für eine höhere Stabilität des mit Lasten zu belegenden inneren Wagens 104. Der Palettenrahmen 106 wird von dem vorderen Teil 67 und dem hinteren Teil 69 des Trolleys eingefasst. Aus dem vorderen Teil 67 mit dem ersten Ständer 19 geht seitlich in vorderer Richtung die Trolleykupplungsstange 39 mit dem Kupplungsstangenauge 41 heraus. Aus dem hinteren Teil 69 des Trolleys geht ein Anhängekupplungstrapezblech 43 mit einem entsprechenden Kupplungsstangenauge 41 heraus, so dass zwei, drei oder noch mehr äußere Wagen 9 zu einem mehrere Wagen umfassenden Transportsystem zusammengekuppelt werden können. Der Trolleybügel 15 mit seinen Teilen vorderer Ständer 19, rückwärtiger Ständer 21, vordere Längsverstrebungsführung 23, hintere Längsverstrebungsführung 25 und Trolleylängsverstrebung 17 bilden den stabilisierenden und begrenzenden Rahmen für das auf den Güterträger aufzulegenden Transportgut, dass durch die Anschlagsnasen 118, 120 gegen seitliches Herunterrutschen vom Palettenrahmen 106 gesichert wird. Mit wenigen Mitteln 118, 120, die im Vergleich zur Größe des Palettenrahmens 106 kurz und flach sind, können die durch die Verstärkungsstreben 112, wie Längsstreben 114 oder Querstreben 116, und Aufsatzbrettern 108, 110 gehaltenen Güter gegen Herunterrutschen gesichert werden.

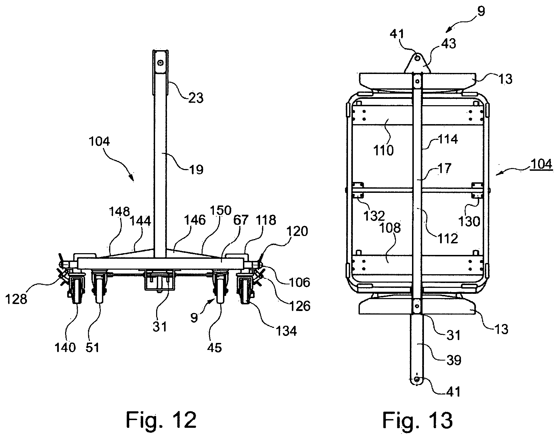

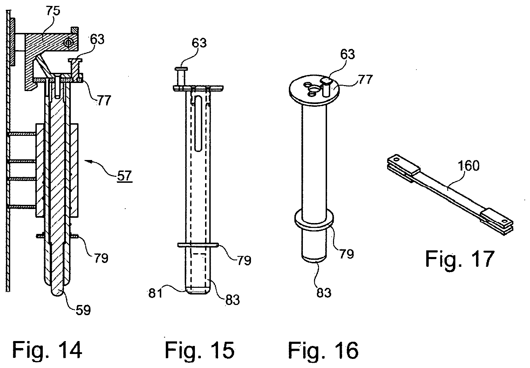

Die Arretierungsstempel 122, 124, die Teile der Stempelbremsen 126, 128 bilden, sind so dimensioniert, dass im eingefahrenen Zustand eine einheitliche Plattform 11 über den äußeren Wagen 9 und den inneren Wagen 104 gebildet werden kann, die einheitliche Plattform 11 fällt mit der in Figur 13 dargestellten Trolleyplattform 13 zusammen. Die Verriegelungsfedern 144, 146 sind einseitig auf der vorderen inneren Seite des Trolleys vorhanden. Das Gegenstück stellt der in Figur 14 detaillierter dargestellte Verriegelungsbolzen 57 dar, der in den Figuren 9 bis 13 aus Übersichtlichkeitsgründen weggelassen worden ist. Die Rollen 45, 47, 49, 51 sowie 134, 136, 138 und 140 können zueinander schwenkbeweglich verdreht werden. Hierdurch ist es möglich den äußeren Wagen 9 und den inneren Wagen 104 durch seitliches Verschieben in die Ankuppelposition I zu bringen.

Wie in den Figuren 12 und 13 dargestellt, fluchten der innere Wagen 104 und der äußere Wagen 9 in der Ankuppelposition I. Jeweils zwei Räder sind somit in einer fluchtenden Anordnung, so dass in der Vorderansicht der Figur 12 nur die Räder 45, 51 des äußeren Wagens 9 und die dazu nach Außen versetzten Räder 134, 140 zu sehen sind. Diese Anordnung sorgt für eine bessere Geradeausbewegung. Genauso ist in der Vorderansicht der Figur 12 nur der vordere Teil 67 des Trolleys zu sehen, hinter dem die erste Verriegelungsfeder 144 und die zweite Verriegelungsfeder 146 mit ihren Rampen 148, 150 nach oben hervorschauen. Ebenfalls von vorne können die Anschlagsnasen 118, 120 gesehen werden, die aus der in Figur 9 dargestellten Plattform 11 herausstehen. Der Palettenrahmen 106 liegt in der gleichen Ebene wie die Trolleyplattform 13. Ebenfalls seitlich als äußerste Teile stehen die Bewegungsgestänge der Stempelbremsen 126, 128 heraus, so dass die Stempelbremsen 126, 128 leicht durch eine Fußbewegung bedienbar sind. Die Trolleydeichsel 31 verbindet die beiden Trolleyräder 45, 51. Der vordere Ständer 19 wird durch die erste Längsverstrebungsführung 23 abgeschlossen.

In Figur 13 ist in der Draufsicht des äußeren Wagens 9 und des inneren Wagens 104 gut zu sehen, dass die Trolleylängsverstrebung 17 und wenigstens ein Verstärkungsstreben 112, wie zum Beispiel der Längsstreben 114, räumlich übereinanderfallen. Die Querstrebe 116, die die Verwindungssteifigkeit zusammen mit den Aufsetzbrettern 108, 110 fördert, verläuft im rechten Winkel zu dem Längsstreben 114. Randlings der Querverstrebung 116 sind die Stempelträger 130, 132 angeordnet.

Weiter zeigen Figuren 9a und 9b ein Lenkgetriebe mit welchem die Trolleyräder 45, 47, 49 und 51 des vorderen und des nachlaufenden hinteren Chassisteils (67 bzw. 69) derart miteinander gekoppelt sind, dass die Trolleyräder 45, 47, 49 und 51 synchron einlenken. Dies erlaubt einen engeren Kurvenradius und ein gleichförmiges Nachlaufen der Wagen im Zuggespann. Der Führer des Zuges muss daher nicht mehr darauf achten, ob etwa die Wagen in der Kurveninnenseite auf Hindernisse auffahren. Im Idealfall laufen die Wagen des Zuges auf einer gemeinsamen Kreisbahn, entsprechend des durch die Zugmaschine vorgegebenen Kurvenradius.

Im vorliegenden Ausführungsbeispiel wird das Lenkgetriebe von miteinander über Zahnräder gekoppelte Wellen gebildet. Dabei sind die Spurstangen 160 und 162, des vorderen Teils 67 und die Spurstangen 164 und 168 des hinteren, nachlaufenden Teils 69 jeweils mit einer parallel zum Ständer 19 bzw. 21 angeordneten Welle gekoppelt. Beide Wellen sind über eine parallel zum Trolleybügel 15 angeordnete Welle verbunden und bilden damit das Lenkgetriebe.

Im geschilderten Ausführungsbeispiel ist die Welle des Trolleybügels 15 teleskopierbar ausgebildet. Zusammen mit dem längsverstellbaren Trolleybügel 15 kann die Länge des Wagens zur Anpassung an Güterträger mit unterschiedlichen Längen variiert werden. Anstelle von längsverstellbaren Trolleybügel 15 können auch entsprechend abgelängte Trolleybügel 15 verwendet werden.

Der in den Figuren 14 bis 16 sowie 20 bis 22 dargestellte Klinkenstift 59 als Teil des Verriegelungsbolzens 57 ist ein selbstauslösender Klinkenstift 59, der über eine Klinkestiftsperrkralle 75 in der entriegelten Position gehalten werden kann. Ist der Verriegelungsbolzen 57 an der Stelle, die aus der in den zuvor beschriebenen Figuren gebildeten Federhalter 152 ergibt, sich ausbildenden Aufnahmepfanne eingefahren, so kann der Verriegelungsbolzen über den Hebestift 63, der in dem Klinkenstiftteller 77 sitzt, wieder manuell entsperrt werden. Der Klinkenstift 59 ist in dem Bolzenauge 61 geführt. Das Bolzenauge 61 ist an dem vorderen Ständer 19 befestigt. Ein zweiter Klinkenstiftteller 79 ist in der Nähe der Klinkenstiftspitze 81 angeordnet, der als Anlagerungspunkt für eine Spiralfeder dient. Die Spiralfeder fördert das selbsttätige Absenken des Verriegelungsbolzens 57. Der Klinkenstift 59 ist zweiteilig mit einer äußeren Hülle 83 aufgebaut.

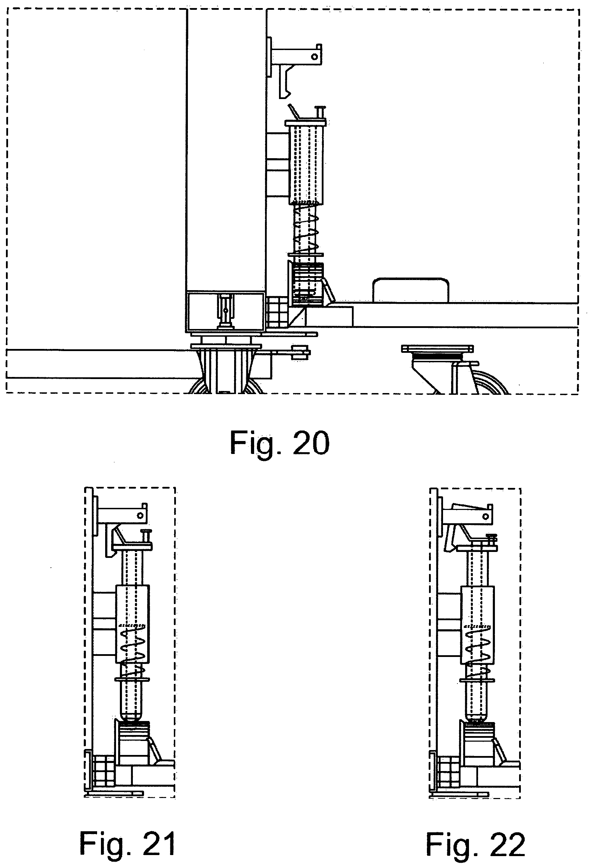

Die Figuren 20 bis 25 zeigen das Funktionsprinzip der Kupplung oder Verriegelung 65 ,154 zum lösbaren Verbinden des Güterträgers 100 mit dem Trolley 5. Eine solche Verriegelung 65, 154 ist am Trolley 5 jeweils seitens des vorderen und hinteren Chassisteils 67 bzw. 69 angebracht und wirkt jeweils mit dem entsprechenden Verriegelungsteil am Güterträger 100 zusammen.

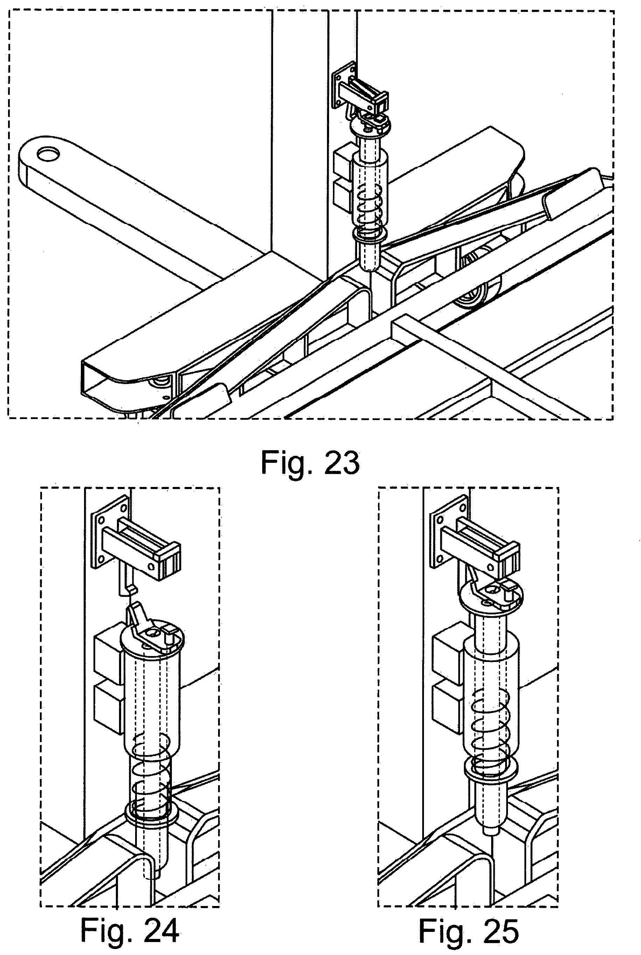

Durch einen Seilzug, wird der Verriegelungsbolzen 57, der den Wagen verriegelt angehoben. Dieser rastet in einer Klinke ein und der Güterträgers 100 kann entnommen werden (Grundstellung gem. Fig. 23). Durch Einfahren des Güterträgers 100 wird der koaxiale, innenliegende Klinkenstift 59 bodenseitig an einer Rampe des Güterträgers 100 vorbei geschoben und dadurch angehoben, wie dies die Figuren 21 und 22 zeigen. Der Klinkenstift 59 wirkt kopfseitig mit einer Klinke zusammen, die den Klinkenstift 59 beim Anheben zusammen mit dem Verriegelungsbolzen 57 frei gibt. Dadurch fällt der Verriegelungsbolzen 57 zwischen die Rampen des Güterträgers 100 und verriegelt diesen (Fig. 24).

In Figur 17 ist die längliche, flache, ausgestreckte, einlagige Blattfeder zu sehen, die eine der Untergreiffedern 160 ist.

Im Werkseinsatz, also im Betrieb, läst sich der innere Wagen 104, auch als fahrbare Palette 102 zu bezeichnen, in einer vom Boden abgehobenen Position, hervorgerufen durch die Stempelbremsen 126, 128 ortsfest beladen. Soll der innere Wagen 104 mit Hilfe des äußeren Wagens 9 wegtransportiert werden, so sind die Stempelbremsen 126, 128 zu lösen. Der innere Wagen wird beim seitlichen Einschieben in den Trolley 5 über eine der Einführöffnungen 27, 29 durch eine der Rampen 148, 150 der Verriegelungsfedern 144, 146 zunächst angehoben, um dann mit dem Verriegelungsbolzen 57 in den Federhalter 152 einzufallen und so eine feste Verbindung zwischen äußerem Wagen 9 und innerem Wagen 104 zu bilden. Der Trolley 5 lässt sich auf verschiedene Größen einer fahrbaren Palette über die Teleskopierbarkeit des Trolleybügels 15 leicht anpassen. So ist ein flexibles, dennoch betriebssicheres Transportsystem geschaffen, dass beliebig verlängerbar ist, und so gut werksintern beim Güterumschlag, der in bodenschienenfreien Hallen realisiert werden kann, einsetzbar ist.

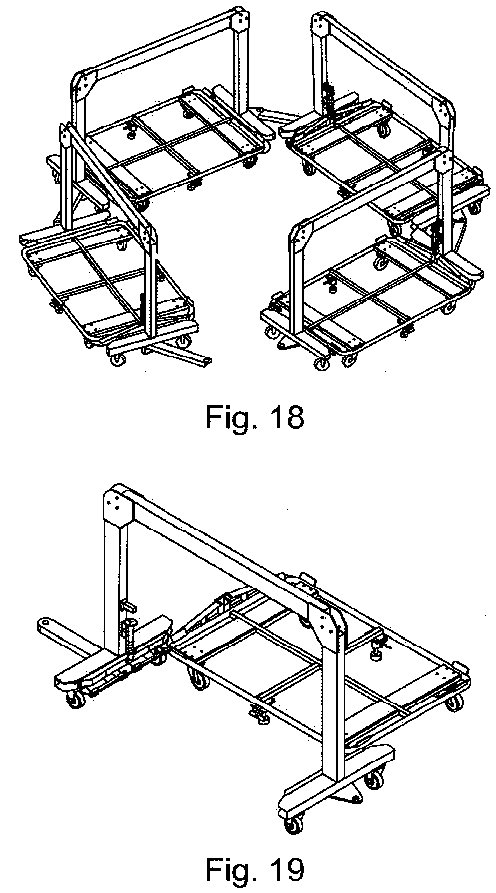

Figur 18 zeigt einen Zug, bei welchem vier Wagen 9 mit einander mittels der jeweiligen Trolleykupplungsstange 39 gekuppelt sind. Dieser Zug kann wiederum mittels der freien Trolleykupplungsstange 39 an eine Zugmaschine gekuppelt werden.

In Figur 19 ist ein Wagen mit einem Güterträger beim Einfädeln gezeigt. Vorzugsweise sind die Güterträgerführungen 33 und 35 derart ausgebildet, dass der Güterträger von beiden Seiten des Wagens einführbar ist. Dies fördert eine universelle Beladbarkeit des Transportsystems.

Um den Güterträger 100 bewegbar zu machen, ist das Chassis des Güterträgers 100 mit Lenk- und oder Blockrollen 134, 136, 138, 140 versehen. Die Lenkrollen sind vertikal schwenkbar und machen den Güterträger 100 manövrierfähig. Dabei ist eine Gabel (Lenkgabel) über ein Schwenklager (Drehkranz) mit dem Befestigungselement verbunden. Das Befestigungselement wird fest am Chassis montiert. Die Gabel bleibt dabei schwenkbar. Um die Gabel leicht schwenken zu können, wird das Rad in der Regel mit einem horizontalen Abstand (Ausladung) zwischen den Achsen des Schwenklagers und des Rades montiert. Durch die Ausladung ist, ein leichtes Schwenken der Rolle ohne zusätzliche Hilfsmittel möglich und verleiht dieser ein stabiles Laufverhalten bei Geradeausfahrt.

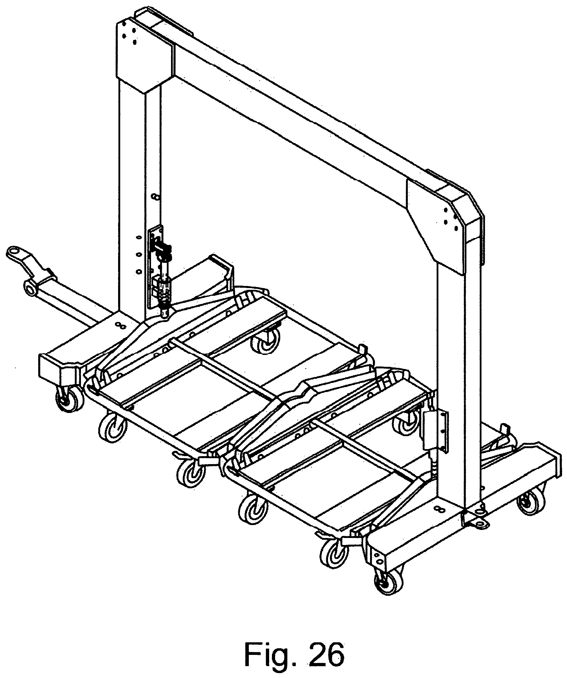

In Fig. 26 ist ein Transportsystem mit zwei Güterträgern 100 dargestellt. Die Güterträger sind vorliegend gleich lang und derart in der Länge abgestimmt, dass sie in den zwischen den Chassisteilen 67, 69 aufgespannte Fläche hineinfinden. Natürlich lässt sich durch die Längsverstellbarkeit des Trolleybügels 15 der Trolley an unterschiedlich Längen der Güterträger 100 anpassen. Bezüglich der Fahrtrichtung sind die beiden Güterträger 100 nachlaufend angeordnet.

Zum selbsttätigen Verriegeln mit dem Trolley 5 sind die Güterträger 100 jeweils mit einer Rampe 148, 150 versehen, welche mit der Verriegelung 56 beim Verbringen des Güterträger 100 in eine Ankuppelposition zusammenwirkt. Die Rampen 148, 150 sind seitensymmetrisch ausgeführt, sodass der Güterträger 100 von beiden Seiten des Trolleys 5 einfahren kann.

Obwohl im Wesentlichen nur ein Ausführungsbeispiel dargestellt worden ist, versteht jeder Fachmann von sich aus, dass auch Gestaltungen mit mehr als nur einer aufnahmefähigen Unterbrechung im äußeren Wagen zu dem Schutzumfang der vorliegenden Erfindung gehören. Genauso kann auch eine erfindungsgemäße Ausführungsform mit mehr als vier Rädern an jedem Wagen gestaltet werden.

**Bezugszeichenliste**

| Bezugszeichen | Gegenstand |
|---|---|
| 1 | Transporteinrichtung bzw. Transportsystem |
| 3 | Zugwagen |
| 5 | Trolley |
| 7 | Chassis |
| 9 | äußerer Wagen |
| 11 | Plattform |
| 13 | Trolleyplattform |
| 15 | Trolleybügel |
| 17 | Trolleylängsverstrebung |
| 19 | erster Ständer |
| 21 | zweiter Ständer |
| 23 | erste Längsverstrebungsführung |
| 25 | zweite Längsverstrebungsführung |
| 27 | erste seitliche Einführöffnung |
| 29 | zweite seitliche Einführöffnung |
| 31 | Trolleydeichsel |
| 33 | Güterträgerführung |
| 35 | Güterträgerführung |
| 37 | Güterträgerführungseinphasenwinkel, insbesondere zur leichteren seitlichen Zentrierung und zur leichteren seitlichen Ausrichtung des Güterträgers zum Trolley |
| 39 | Trolleykupplungsstange |
| 41 | Kupplungsstangenauge |
| 43 | Anhängekupplungstrapezblech |
| 45 | erstes Trolleyrad |
| 47 | zweites Trolleyrad |
| 49 | drittes Trolleyrad |
| 51 | viertes Trolleyrad |
| 53 | Rolle, insbesondere Vollgummirolle |
| 55 | Doppelplattenrollenhalterung, insbesondere dreh- und/oder schwenkfähig |
| 57 | Verriegelungsbolzen |
| 59 | Klinkenstift |
| 61 | Bolzenauge |
| 63 | Hebestift |
| 65 | Teil des Verriegelungsmechanismus, trolleyseitig |
| 67 | vorderer Teil des Trolleys |
| 69 | hinterer Teil des Trolleys |
| 71 | Abstand zwischen dem vorderen und dem hinteren Teil des Trolleys |
| 73 | Trolleybügelhöhe |
| 75 | Klinkenstiftsperrkralle, insbesondere eine selbstauslösende Kippkralle |
| 77 | Klinkenstiftteller |
| 79 | Klinkenstiftteller |
| 81 | Klinkenstiftspitze |
| 83 | Äußere Hülle |
| | |
| 100 | Güterträger |
| 102 | Palette |
| 104 | innerer Wagen |
| 106 | Palettenrahmen |
| 108 | erstes Aufsatzbrett, vorzugsweise aus einem Metall gefertigt |
| 110 | zweites Aufsatzbrett, vorzugsweise aus einem Metall gefertigt |
| 112 | Verstärkungsstreben |
| 114 | Längsstrebe |
| 116 | Querstrebe |
| 118 | Längsanschlagsnase |
| 120 | Queranschlagsnase |
| 122 | erster Arretierungsstempel |
| 124 | zweiter Arretierungsstempel |
| 126 | erste Stempelbremse |
| 128 | zweite Stempelbremse |
| 130 | erster Stempelträger |
| 132 | zweiter Stempelträger |
| 134 | erstes Palettenrad |
| 136 | zweites Palettenrad |
| 138 | drittes Palettenrad |
| 140 | viertes Palettenrad |
| 142 | Rolle, insbesondere Vollgummirolle |
| | |
| 144 | erste Verriegelungsfeder |
| 146 | zweite Verriegelungsfeder |
| 148 | erste Rampe der Verriegelungsfeder |
| 150 | zweite Rampe der Verriegelungsfeder |
| 152 | Federhalter |
| 154 | Teil des Verriegelungsmechanismus, güterträgerseitig |
| | |
| 160 | erste Untergreiffeder |
| 162 | zweite Untergreiffeder |
| 164 | dritte Untergreiffeder |
| 166 | vierte Untergreiffeder |
| 168 | Federhaltebügel, insbesondere flanschartig |
| | |
| I | Ankuppelposition |
| II | ausgekuppelte Position |
| III | Boden, auf dem die Wagen abrollen können |

## Patentansprüche

1. Transportsystem (1) mit einem ersten Wagen (9), der ein Zugwagon bildender Schleppwagen (3) ist und einem zweiten Wagen (104), der ein Wagen (100) zum Gütertransport ist, die beide mit Rädern (45, 47, 49, 51, 134, 136, 138, 140) zur bodenanhaftenden Bewegung ausgestattet sind und der erste Wagen (9) einen ersten Verriegelungsmechanismus (65) für das Ankuppeln eines zweiten Verriegelungsmechanismus (154) des zweiten Wagens (104) aufweist, wobei erster und zweiter Verriegelungsmechanismus (65, 154) selbsttätig die beiden Wagen (9, 104) miteinander verkuppeln, wenn der zweite Wagen (104) in einer Ankuppelposition (I) zum ersten Wagen (9) angeordnet ist,
**dadurch gekennzeichnet, dass**
der erste Wagen (9) erste Räder (45, 47, 49, 51) und der zweite Wagen (104) zweite Räder (134, 136, 138, 140) umfasst, die zueinander schwenkbeweglich verdrehbar ausgebildet sind und der erste Wagen (9) den zweiten Wagen (104) an zwei Seiten (67, 69), die über einen Bügel (15) miteinander verbunden sind, begrenzt sowie das Transportsystem ein Lenkgetriebe, das von miteinander über Zahnräder gekoppelte Wellen gebildet wird, umfasst mit welchem ein vorderes Radpaar und ein nachlaufendes hinteres Radpaar der ersten Räder (45, 47, 49, 51) des ersten Wagens derart miteinander gekoppelt sind, dass die ersten Räder (45, 47, 49, 51) synchron einlenken.

2. Transportsystem nach Anspruch 1,
**dadurch gekennzeichnet, dass**
die zweiten Räder (134, 136, 138, 140) gegenüber den ersten Rädern (45, 47, 49, 51) nach außen versetzt sind.

3. Transportsystem nach einem der Ansprüche 1 bis 2,
**dadurch gekennzeichnet, dass**
der erste Wagen (9) ein vorderes Chassisteil (67) und ein hinteres Chassisteil (69) umfasst.

4. Transportsystem nach Anspruch 3,
**dadurch gekennzeichnet, dass**
die ersten Räder (45, 47, 49, 51) des ersten Wagens dem vorderen Chassisteil (67) und dem hinteren Chassisteil (69) zugeordnet sind.

5. Transportsystem nach einem der Ansprüche 3 bis 4,
**dadurch gekennzeichnet, dass**
Spurstangen (160, 162) des vorderen Chassisteils (67) und Spurstangen (164, 168) des hinteren Chassisteils (69) jeweils mit einer parallel zu einem Ständer (19, 21) des Bügels (15) angeordneten Welle gekoppelt sind, die wiederum über eine parallel zum Bügel (15) angeordnete Welle verbunden sind und das Lenkgetriebe ausbilden.

6. Transportsystem nach einem der Ansprüche 1 bis 5,
**dadurch gekennzeichnet, dass**
der Bügel (15) längsverstellbar ist.

7. Transportsystem nach einem der Ansprüche 1 bis 6,
**dadurch gekennzeichnet, dass**
der erste Verriegelungsmechanismus (65) einen Verriegelungsbolzen (57) umfasst.

8. Transportsystem nach Anspruch 7,
**dadurch gekennzeichnet, dass**
der Verriegelungsbolzen (57) einen Hebestift (63) umfasst.

9. Transportsystem nach Anspruch 8,
**dadurch gekennzeichnet, dass**
der zweite Verriegelungsmechanismus (154) eine erste Verriegelungsfeder (144), eine zweite Verriegelungsfeder (146) sowie einen Federhalter (152) umfasst, der erste Verriegelungsfeder (144) und zweite Verriegelungsfeder (146) voneinander beabstandet.

10. Transportsystem nach Anspruch 9,
**dadurch gekennzeichnet, dass**
die erste Verriegelungsfeder (144) und die zweite Verriegelungsfeder (146) eine erste Rampe (148) und eine zweite Rampe (150) umfassen, die eine solche Neigung aufweisen, dass der Verriegelungsbolzen (57) des ersten Verriegelungsmechanismus (65) angehoben wird, während der zweite Wagen (104) seitlich einfahrbar ist.

11. Gütertransportzug, insbesondere für den betriebsinternen, schienenungebundenen Güterumschlag, der sich aus mehreren Transportsystemen (1) nach einem der Ansprüche 1 bis 10 zusammensetzen lässt.

## Claims

1. A transport system (1), comprising a first carriage (9) which is a tow trolley (3) forming a train carriage and a second carriage (104) which is a carriage (100) for the transport of goods, which are both equipped with wheels (45, 47, 49, 51, 134, 136, 138, 140) for movement adhering firmly to the ground, and the first carriage (9) comprises a first locking mechanism (65) for coupling a second locking mechanism (154) of the second carriage (104), wherein the first and the second locking mechanism (65, 154) automatically couple the two carriages (9, 104) when the second carriage (104) is arranged in a coupling position (I) relative to the first carriage (9), **characterized in that** the first carriage (9) comprises first wheels (45, 47, 49, 51) and the second carriage (104) comprises second wheels (134, 136, 138, 140) which are arranged in a pivotably twistable manner with respect to each other, and the first carriage (9) delimits the second carriage (104) at two sides (67, 69), which are connected to each other via a bracket (15), and the transport system comprises a steering gear which is formed by shafts which are coupled to each other via gearwheels and with which a front pair of wheels and a trailing rear pair of wheels of the first wheels (45, 47, 49, 51) of the first carriage are coupled to each other in such a way that the first wheels (45, 47, 49, 51) are turn in synchronously.

2. A transport system according to claim 1, **characterized in that** the second wheels (134, 136, 138, 140) are offset to the outside relative to the first wheels (45, 47, 49, 51).

3. A transport system according to one of the claims 1 to 2, **characterized in that** the first carriage (9) comprises a front chassis part (67) and a rear chassis part (69).

4. A transport system according to claim 3, **characterized in that** the first wheels (45, 47, 49, 51) of the first carriage are associated with the front chassis part (67) and the rear chassis part (69).

5. A transport system according to one of the claims 3 to 4, **characterized in that** track rods (160, 162) of the front chassis part (67) and track rods (164, 168) of the rear chassis part (69) are each coupled to a shaft which is arranged parallel to a post (19, 21) of the bracket (15), which on their part are connected via a shaft arranged parallel to the bracket (15) and form the steering gear.

6. A transport system according to one of the claims 1 to 5, **characterized in that** the bracket (15) is longitudinally adjustable.

7. A transport system according to one of the claims 1 to 6, **characterized in that** the first locking mechanism (65) comprises a locking bolt (57).

8. A transport system according to claim 7, **characterized in that** the locking bolt (57) comprises a lift pin (63).

9. A transport system according to claim 8, **characterized in that** the second locking mechanism (154) comprises a first locking spring (144), a second locking spring (146) and a spring holder (152) which spaces the first locking spring (144) and the second locking spring (146) from each other.

10. A transport system according to claim 9, **characterized in that** the first locking spring (144) and the second locking spring (146) comprise a first ramp (148) and a second ramp (150), which have such an inclination that the locking bolt (57) of the first locking mechanism (65) is lifted, while the second carriage (104) is laterally retractable.

11. A goods transport train, especially for in-house off-track goods handling, which can be composed of several transport systems (1) according to one of the claims 1 to 10.

## Revendications

1. Système de transport (1) avec un premier chariot (9) qui est un chariot-remorque (3) formant un wagon de train et avec un deuxième chariot (104), qui est un chariot (100) pour le transport de marchandises, tous deux équipés de roues (45, 47, 49, 51, 134, 136, 138, 140) pour un déplacement en adhérence au sol, le premier chariot (9) comprenant un premier mécanisme de verrouillage (65) pour le couplage d'un deuxième mécanisme de verrouillage (154) du deuxième chariot (104), les premier et deuxième mécanismes de verrouillage (65, 154) accouplant automatiquement les deux chariots (9, 104) quand le deuxième chariot (104) est disposé dans une position d'accouplement (I) avec le premier chariot (9),
**caractérisé en ce que** le premier chariot (9) possède des premières roues (45, 47, 49, 51) et le deuxième chariot (104) des deuxièmes roues (134, 136, 138, 140) qui sont conçues avec possibilité de rotation et de pivotement les unes vers les autres, et le premier chariot (9) délimite le deuxième chariot (104) sur deux côtés (67, 69) qui sont reliés entre eux par un arceau (15), et le système de transport possède un engrenage de direction qui est formé par des arbres couplés entre eux par des roues dentées, avec lequel une paire de roues avant et une paire de roue arrière suivante des premières roues (45, 47, 49, 51) du premier chariot sont couplées entre elles de telle façon que les premières roues (45, 47, 49, 51) soient orientées de façon synchrone.

2. Système de transport selon la revendication 1, **caractérisé en ce que** les deuxièmes roues (134, 136, 138, 140) sont décalées vers l'extérieur par rapport aux premières roues (45, 47, 49, 51).

3. Système de transport selon l'une des revendications 1 à 2, **caractérisé en ce que** le premier chariot (9) comprend une partie de châssis avant (67) et une partie de châssis arrière (69).

4. Système de transport selon la revendication 3, **caractérisé en ce que** les premières roues (45, 47, 49, 51) du premier chariot sont associées à la partie de châssis avant (67) et à la partie de châssis arrière (69).

5. Système de transport selon l'une des revendications 3 à 4, **caractérisé en ce que** des barres d'accouplement (160, 162) de la partie de châssis avant (67) et des barres d'accouplement (164, 168) de la partie de châssis arrière (69) sont couplées à des arbres disposés parallèlement à un support (19, 21) de l'arceau (15), qui sont reliés à leur tour par un arbre disposé parallèlement à l'arceau (15) et forment l'engrenage de direction.

6. Système de transport selon l'une des revendications 1 à 5, **caractérisé en ce que** l'arceau (15) est réglable en longueur.

7. Système de transport selon l'une des revendications 1 à 6, **caractérisé en ce que** le premier mécanisme de verrouillage (65) comprend un boulon de verrouillage (57).

8. Système de transport selon la revendication 7, **caractérisé en ce que** le boulon de verrouillage (57) comprend une goupille de levage (63).

9. Système de transport selon la revendication 8, **caractérisé en ce que** le deuxième mécanisme de verrouillage (154) comprend un premier ressort de verrouillage (144), un deuxième ressort de verrouillage (146) et un support de ressorts (152) qui tient le premier ressort de verrouillage (144) et le deuxième ressort de verrouillage (146) écartés l'un de l'autre.

10. Système de transport selon la revendication 9, **caractérisé en ce que** le premier ressort de verrouillage (144) et le deuxième ressort de verrouillage (146) comprennent une première rampe (148) et une deuxième rampe (150) qui ont une inclinaison telle que le boulon de verrouillage (57) du premier mécanisme de verrouillage (65) soit soulevé tandis que le deuxième chariot (104) peut rentrer latéralement.

11. Train de transport de marchandises, en particulier pour le transbordement par rail de marchandises à l'intérieur de l'entreprise, qui peut être composé à partir de plusieurs systèmes de transport (1) selon l'une des revendications 1 à 10.
